# EUROPEAN PATENT APPLICATION

(11) **EP 1 614 718 A1**
(43) Date of publication of application: **11.01.2006**
(21) Application number: 05254299.0
(22) Date of filing: 08.07.2005
(51) Int. Cl.: C08L 71/02

(54) **Curable fluoropolyether compositions, their preparation and use**

(30) Priority: 08.07.2004 JP 2004201961
(71) Applicant: Shin-Etsu Chemical Co., Ltd., Tokyo (JP)
(72) Inventor: Shiono, Mikio, Shin-Etsu Chemical Co., Ltd., Usui-gun Gunma-ken (JP)
(74) Representative: Stoner, Gerard Patrick

(57) **Abstract**

A curable fluoropolyether composition comprises (A) a fluoropolyether compound, (B) a perfluoropolyether, (C) an organohydrogenpolysiloxane, (D) spherical silica powder, (E) a fluorinated trialkoxysilane, and (F) a platinum catalyst. The composition can be heavily loaded with the silica (D).
By virtue of using components (A) and (B) both having a perfluoroether structure in the backbone as the base polymer, the curable fluoropolyether composition cures through heating at a low temperature for a short time into a product having good heat resistance, freeze resistance, oil resistance, solvent resistance, chemical resistance, moisture resistance, and electrical insulation.

## Description

This invention relates to fluoropolyether compositions of the addition cure type which cure into products having heat resistance, freeze resistance, oil resistance, solvent resistance, chemical resistance, moisture resistance and electrical insulation and are suited e.g. in potting, molding, sealing or coating for the protection of electric and electronic devices and components.

### BACKGROUND

Liquid silicone rubbers are useful protective materials for electric and electronic devices and components. By virtue of their excellent heat resistance, freeze resistance, weather resistance, moisture resistance and electrical insulation and stable electrical properties, they are commercially utilized, for example, in potting of transformer high voltage circuits, potting of electronic control units and sensors in automobiles, coating of printed circuits, printed substrates, ceramic substrates, conductor sleeves or the like, potting and coating of hybrid ICs and semiconductor components in automobiles and electric appliances, and sealing and molding of wiring cables, cable joints, cable conduits and the like in electrical systems in vehicles, ships and aircraft.

Typical compositions affording such liquid silicone rubbers are organopolysiloxane compositions of the addition cure type. Known organopolysiloxane compositions of the addition cure type include compositions comprising an organopolysiloxane having silicon-bonded vinyl groups and an organohydrogenpolysiloxane having silicon-bonded hydrogen atoms, wherein crosslinking reaction takes place in the presence of a platinum catalyst to form rubbery cured products, and compositions comprising a fluorine-modified organopolysiloxane having silicon-bonded vinyl groups and a fluorine-modified organohydrogenpolysiloxane having silicon-bonded hydrogen atoms, wherein similar crosslinking reaction takes place in the presence of a platinum catalyst to form rubbery cured products.

Typical of these silicone compositions are organopolysiloxane compositions of the addition cure type. Known organopolysiloxane compositions of the addition cure type include compositions comprising an organopolysiloxane having silicon-bonded vinyl groups and an organohydrogenpolysiloxane having silicon-bonded hydrogen atoms, wherein crosslinking reaction takes place in the presence of a platinum catalyst to form silicone gel, as disclosed in JP-A 56-143241, JP-A 63-35655, and JP-A 63-33475. Also, fluorosilicone gel compositions comprising an organopolysiloxane having trifluoropropyl groups are known from JP-A 7-324165.

However, the silicone gels resulting from these organopolysiloxane compositions of the addition cure type are prone to swell or degrade in contact with chemicals such as strong bases and strong acids and solvents such as toluene, alcohols and gasoline, often failing to maintain their performance.

As one solution to this problem, JP-A 11-116685 discloses a fluorinated gel composition comprising a linear perfluoro compound having two alkenyl groups in a molecule as a main component, an organohydrogenpolysiloxane having silicon-bonded hydrogen atoms, and a platinum catalyst, and a fluorinated gel cured therefrom.

In the event the gel is used as a filler, a gel composition having a gel-forming ability must be potted or filled into a portion to be filled. The gel composition must have an adequate flow. Nevertheless, prior art well-known gel compositions have an extremely high flow and are inadequate for potting. One solution to this problem is JP-A 2002-363407 which discloses a curable fluorinated gel composition in which finely divided silica is compounded for imparting thixotropy, and a cured product thereof.

Furthermore, to overcome the drawbacks of the above-mentioned liquid silicone rubbers, JP-A 2000-7835 discloses a fluorinated curable composition based on a perfluoro compound and a fluorinated organohydrogenpolysiloxane. More specifically, the rubber composition of the millable type disclosed comprises a perfluoro compound having at least two alkenyl groups in a molecule and a divalent perfluoroalkylene or divalent perfluoropolyether structure in the backbone and a compound having at least two hydrosilyl groups in a molecule and capable of addition reaction with alkenyl groups, the latter compound being added to some alkenyl groups on the perfluoro compound to form a polymer. The composition is rubber roll workable and compression moldable.

Also known are fluoropolyether-base rubber compositions comprising a linear fluoropolyether compound having at least two alkenyl groups in a molecule and a perfluoroalkylether structure in a backbone, an organohydrogenpolysiloxane having at least two silicon-bonded hydrogen atoms in a molecule, and a hydrosilylating reaction catalyst. By compounding therein microparticulate silica having a hydrophobized surface and a surface area of at least 50 m²/g, fluoropolyether-base rubber compositions are obtained which have improved mechanical strength and a good balance of heat resistance, chemical resistance, solvent resistance, mold release, water repellency, oil repellency and weather resistance in the cured state. See JP-A 2000-248166, JP-A 2001-192546, and JP-A 2001-164115.

An object of the present invention is to provide a gel or liquid rubber composition having a perfluoroalkylether structure which can be heavily loaded with spherical silica. Another object is to provide a curable fluoropolyether composition which can form a cured gel product which is conformable when shear stresses are applied by potting operation through a dispenser or the like, has a good balance of heat resistance, chemical resistance, solvent resistance, mold release, water repellency, oil repellency and weather resistance in the cured state, and is suited as a protective seal or the like.

The inventor has discovered that a curable fluoropolyether composition of the formulation defined below cures into a reliable product having good heat resistance, freeze resistance, weather resistance, moisture resistance, and electrical insulation as well as solvent resistance, oil resistance and chemical resistance.

The present invention provides a curable fluoropolyether composition comprising
(A) 20 to 80 parts by weight of a fluoropolyether compound having the general formula (1):

   CH₂=Ch-(X)ₐ-Rf¹-(X')ₐ-CH=CH₂ (1)

   wherein X is a divalent group represented by -CH₂- -CH₂O-, -CH₂OCH₂- or -Y-NR¹-CO- wherein Y is a divalent group of -CH₂- or 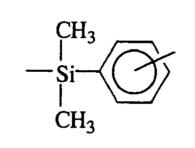 and R¹ is hydrogen or a substituted or unsubstituted monovalent hydrocarbon group; X' is a divalent group represented by -CH₂- , -OCH₂-, -CH₂OCH₂- or -CO-NR¹-Y'- wherein Y' is a divalent group of -CH₂- or 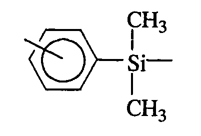 and R¹ is as defined above; "a" is independently 0 or 1; and Rf¹ is a divalent group having the general formula (i):

   -CF(CF₃)-[OCF₂CF(CF₃)]ₚ-O-CF₂(CF₂)ᵣCF₂-O-[CF(CF₃)CF₂O]_{q}-CF(CF₃)- (i)

   wherein p and q each are an integer of at least 1, the sum of p+q on average is 2 to 200, and r is an integer of 0 to 6, or the general formula (ii):

   -CF₂CF₂-[OCF₂CF(CF₃)]ₛ-O-CF₂(CF₂)ᵣCF₂-O-[CF(CF₃)CF₂O]ₜ-CF₂CF₂- (ii)

   wherein s and t each are an integer of at least 1, the sum of s+t on average is 2 to 200, and r is as defined above,
(B) at least one perfluoropolyether selected from the class consisting of compounds having the general formula (2):

   A-O-(CF₂CF₂CF₂O)_{b}-A (2)

   wherein A is independently a group of CF₃- , C₂F₅- or C₃F₇-, b is an integer of 1 to 200 and smaller than the sum of p+q (average) and r in formula (i) or the sum of s+t (average) and r in formula (ii) for Rf¹ in formula (1), compounds having the general formula (3):

   A-O-(CF₂O)_{c}(CF₂CF₂O)_{d}-A (3)

   wherein A is as defined above, c and d each are an integer of 1 to 200, and the sum of c and d is smaller than the sum of p+q (average) and r in formula (i) or the sum of s+t (average) and r in formula (ii) for Rf¹ in formula (1), and compounds having the general formula (4):

   A-O-(CF₂O)ₑ[CF₂CF(CF₃)O]_{f}-A (4)

   wherein A is as defined above, e and f each are an integer of 1 to 200, and the sum of e and f is smaller than the sum of p+q (average) and r in formula (i) or the sum of s+t (average) and r in formula (ii) for Rf¹ in formula (1), component (B) being present in such an amount as to give 100 parts by weight of components (A) and (B) combined,
(C) an organohydrogensiloxane having at least one perfluorooxyalkyl, perfluoroalkyl, perfluorooxyalkylene or perfluoroalkylene group and at least two silicon-bonded hydrogen atoms (Si-H groups) in a molecule, component (C) being present in such an amount as to provide 0.5 to 2.0 moles of Si-H groups per mole of alkenyl groups in component (A),
(D) a spherical silica powder having an average particle size of 0.1 to 5.0 µm, in an amount of 50 to 250 parts by weight per 100 parts by weight of components (A), (B) and (C) combined,
(E) a fluorinated trialkoxysilane having the general formula (5):

   Rf²-(X')ₐ-CH₂CH₂Si(OR²)₃ (5)

   wherein X' and "a" are as defined in formula (1), R² is a monovalent hydrocarbon group, and Rf² is a monovalent group having the general formula (iii):

   F-[CF(CF₃)CF₂O]ᵤ-CF(CF₃)- (iii)

   wherein u is an integer of at least 1 and smaller than the sum of p+q (average) and r in formula (i) or the sum of s+t (average) and r in formula (ii) for Rf¹ in formula (1), or the general formula (iv):

   CᵥF₂ᵥ₊₁- (iv)

   wherein v is an integer of at least 1 and smaller than the number giving the same formula weight as Rf¹ in formula (1), component (E) being present in an amount of 0.2 to 4.0 parts by weight per 100 parts by weight of component (D), and
(F) an effective amount of a platinum group metal catalyst.

In a preferred embodiment, the curable fluoropolyether composition further comprises (G) an organosiloxane having in a molecule at least one silicon-bonded hydrogen atom (Si-H group), and at least one epoxy group bonded to a silicon atom through a carbon atom(s) or carbon and oxygen atoms, at least one trialkoxy group bonded to a silicon atom through a carbon atom(s) or carbon and oxygen atoms, or a mixture of at least one such epoxy group and at least one such trialkoxy group, component (G) being present in an amount of 0.1 to 5.0 parts by weight per 100 parts by weight of components (A), (B) and (C) combined.

By virtue of using components (A) and (B) both having a perfluoroether structure in the backbone as the base polymer, the curable fluoropolyether composition of the invention cures through heating at a relatively low temperature for a relatively short time into a product having good heat resistance, freeze resistance, oil resistance, solvent resistance, chemical resistance, moisture resistance, and electrical insulation. Thus the composition is best suited for potting, molding, sealing, and coating for the protection of electric and electronic devices and components which require long-term protection even in a rigorous service environment. An article comprising the cured composition as a partial or entire structure exhibits superior properties as described above.

### FURTHER EXPLANATIONS; OPTIONS AND PREFERENCES

### Component A

Component (A) in the inventive composition is a branched fluoropolyether compound serving as a main component in the composition. It has the general formula (1).

CH₂=CH-(X)ₐ-Rf¹-(X¹)ₐ-CH=CH₂ (1)

Herein X is a divalent group represented by -CH₂-, -CH₂O-, -CH₂OCH₂- or -Y-NR¹-CO- wherein Y is a divalent group of -CH₂- or 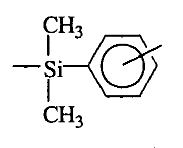 and R¹ is hydrogen or a substituted or unsubstituted monovalent hydrocarbon group; X' is a divalent group represented by -CH₂-, -OCH₂-, -CH₂OCH₂- or -CO-NR¹-Y'- wherein Y' is a divalent group of -CH₂- or 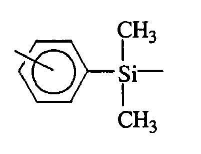 and R¹ is as defined above; and the subscript "a" is independently 0 or 1.

The monovalent hydrocarbon groups represented by R¹ in X and X' are preferably those of 1 to 12 carbon atoms, more preferably 1 to 10 carbon atoms, for example, alkyl groups such as methyl, ethyl, propyl, butyl, hexyl, cyclohexyl and octyl, aryl groups such as phenyl and tolyl, aralkyl groups such as benzyl and phenylethyl, and substituted monovalent hydrocarbon groups in which some or all of the hydrogen atoms are replaced by halogen atoms, typically fluorine atoms.

In formula (1), Rf¹ is a divalent group having the general formula (i):

-CF(CF₃)-[OCF₂CF(CF₃)]ₚ-O-CF₂(CF₂)ᵣCF₂-O-[CF(CF₃)CF₂O]_{q}-CF(CF₃)- (i)

wherein p and q each are an integer of at least 1, the sum of p+q on average is 2 to 200, and r is an integer of 0 to 6, or the general formula (ii):

-CF₂CF₂- [OCF₂CF(CF₃)]ₛ-O-CF₂(CF₂)ᵣCF₂-O-[CF(CF₃)CF₂O]ₜ-CF₂CF₂- (ii)

wherein s and t each are an integer of at least 1, the sum of s+t on average is 2 to 200, and r is as defined above.

Illustrative examples of Rf¹ group include groups of the formulae (a-1) and (a-2) shown below, with the groups of the structure having formula (a-1) being preferred. 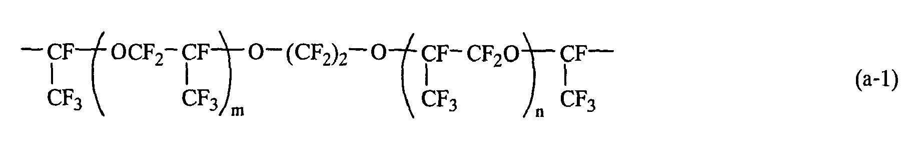 In formula (a-1), m and n each are an integer of at least 1, and the sum of m+n on average is 2 to 200. 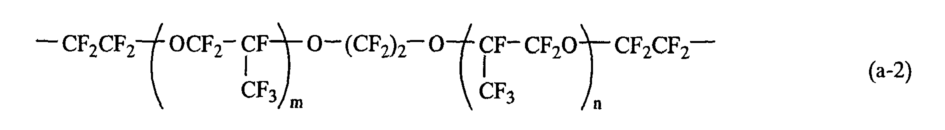 In formula (a-2), m and n each are an integer of at least 1, and the sum of m+n on average is 2 to 200.

Illustrative examples of the fluoropolyether compound having formula (1) are given below. 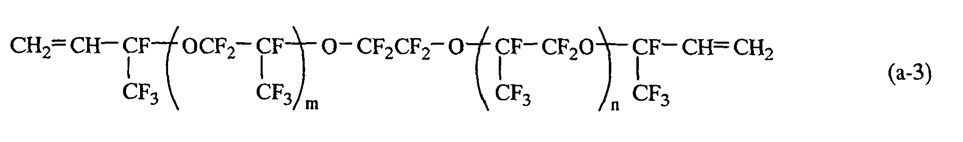 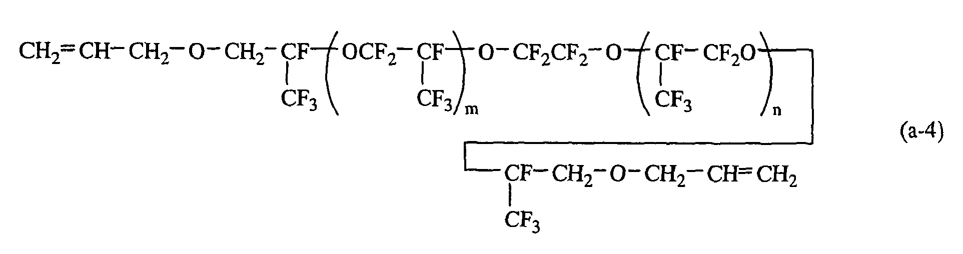 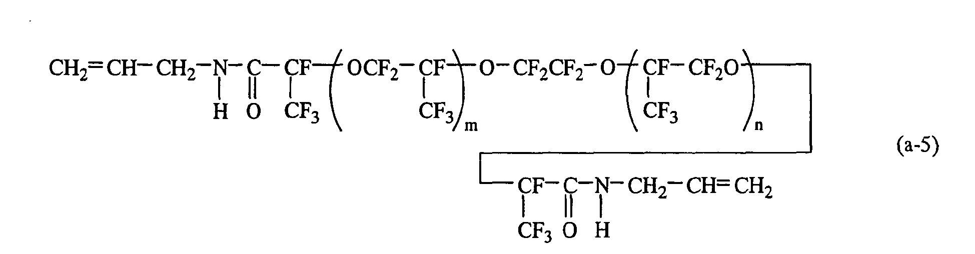 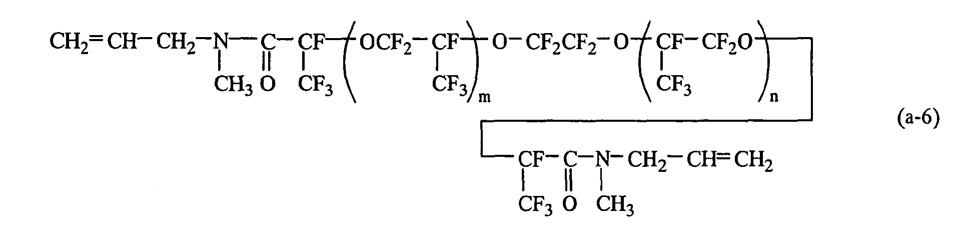 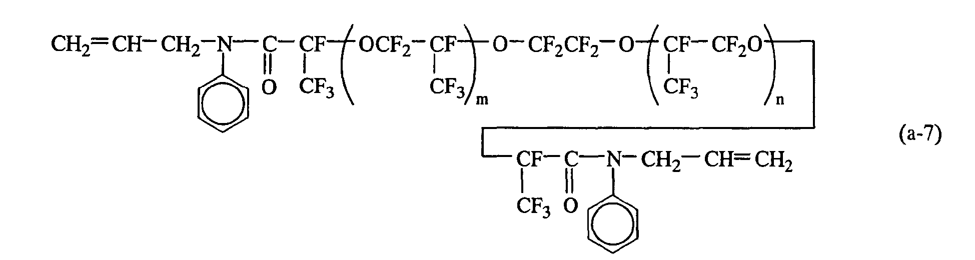 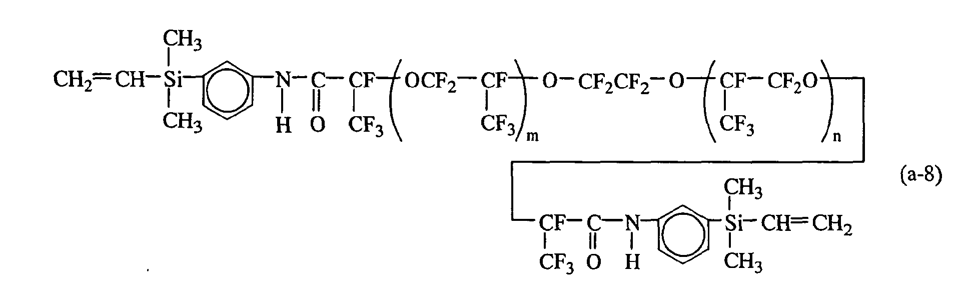 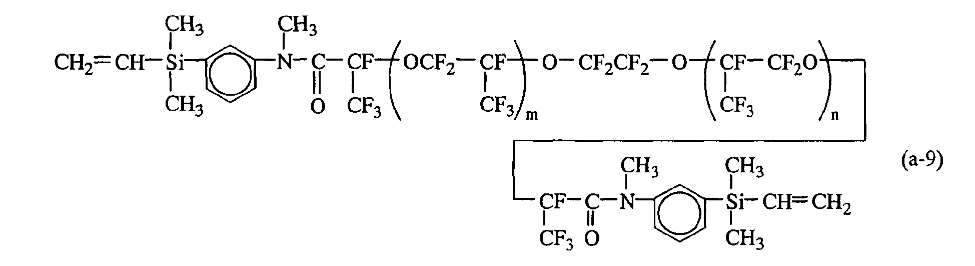 In formulae (a-3) through (a-9), m and n each are an integer of at least 1, and the sum of m+n on average is 2 to 200.

Component (A) should preferably have a viscosity at 23°C of 100 to 100,000 mPa·s, more preferably 500 to 50,000 mPa·s, and even more preferably 1,000 to 20,000 mPa·s. This viscosity range ensures that when the composition is used for potting, molding, sealing, coating or similar purposes, the cured product is endowed with proper physical properties. Within this viscosity range, it is possible to select a viscosity most appropriate to a particular application.

The amount of component (A) compounded is 20 to 80 parts by weight and sums to 100 parts by weight when combined with component (B).

### Component B

Component (B) in the inventive composition is a linear or branched perfluoropolyether. The inclusion of component (B) enables to improve the fluidity of the composition and at the same time, impart softness and flexibility to the cured product of the composition.

Component (B) is at least one perfluoropolyether selected from the class consisting of compounds having the general formulae (2) to (4).

A-O-(CF₂CF₂CF₂O)_{b}-A (2)

Herein A is independently a group of CF₃-, C₂F₅- or C₃F₇-, b is an integer of 1 to 200 and smaller than the sum of p+q (average) and r in formula (i) or the sum of s+t (average) and r in formula (ii) for Rf¹ in formula (1) (i.e., b < p+q+r or b < s+t+r).

A-O-(CF₂O)_{c}(CF₂CF₂O)_{d}-A (3)

Herein A is as defined above, c and d each are an integer of 1 to 200, and the sum of c and d is smaller than the sum of p+q (average) and r in formula (i) or the sum of s+t (average) and r in formula (ii) for Rf¹ in formula (1) (i.e., c+d < p+q+r or c+d < s+t+r).

A-O-(CF₂O)ₑ[CF₂CF(CF₃)O]_{f}-A (4)

Herein A is as defined above, e and f each are an integer of 1 to 200, and the sum of e and f is smaller than the sum of p+q (average) and r in formula (i) or the sum of s+t (average) and r in formula (ii) for Rf¹ in formula (1) (i.e., e+f < p+q+r or e+f < s+t+r).

In the perfluoropolyethers of formulae (2) to (4), b in formula (2), c and d in formula (3), and e and f in formula (4) are selected so as to meet the above condition relative to p, q and r in formula (i) or s, t and r in formula (ii) representing Rf¹ in formula (1), preventing component (B) from bleeding out of the cured composition.

Illustrative examples of the perfluoropolyether are given below.

CF₃CF₂CF₂O-(CF₂CF₂CF₂O)_{b}-CF₂CF₃ (b-1)

Herein b is as defined in formula (2).

CF₃-(OCF₂CF₂)_{d}(OCF₂)_{c}-O-CF₃ (b-2)

Herein c and d are as defined in formula (3).

CF₃-[OCF(CF₃)CF₂]_{f} (OCF₂)ₑ-O-CF₃ (b-3)

Herein e and f are as defined in formula (4).

Component (B) should preferably have a viscosity at 23° C of 100 to 3,000 mPa·s.

The amount of component (B) compounded is in a range of 20 to 80 parts by weight and sums to 100 parts by weight when combined with component (A). Less than 20 parts of component (B) fails to achieve the addition effect. If the composition contains more than 80 parts of component (B), component (B) will bleed out of the cured composition. One or more perfluoropolyethers may be used as component (B).

### Component C

Component (C) is a fluorinated organohydrogensiloxane serving as a crosslinker or chain extender for component (A). For compatibility and dispersion with components (A) and (B) and cured uniformity, component (C) should preferably have in a molecule at least one fluorinated group such as perfluorooxyalkyl, perfluoroalkyl, perfluorooxyalkylene or perfluoroalkylene group, and at least two silicon-bonded hydrogen atoms (Si-H groups).

The fluorinated groups include, for example, groups of the following general formulae.

C_{g}F_{2g+1} -

Herein g is an integer of 1 to 20, preferably 2 to 10.

F-[CF(CF₃)CF₂O]ₕ-CF(CF₃)-

Herein h is an integer of 2 to 200, preferably 2 to 100.

-CⱼF₂ⱼ-

Herein j is an integer of 1 to 20, preferably 2 to 10.

-CF(CF₃)-[OCF₂CF(CF₃)]ₓ-O-CF₂CF₂-O-[CF(CF₃)CF₂O]_{y}-CF(CF₃)-

Herein x and y each are an integer of at least 1, and an average of x+y is 2 to 200, preferably 2 to 100.

Examples of the organohydrogensiloxane compound having a fluorinated group (C) are given below. These compounds may be used alone or in admixture of two or more. Note that Me is methyl and Ph is phenyl.

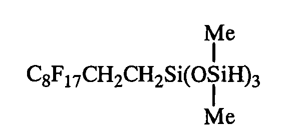

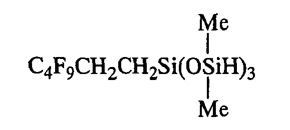

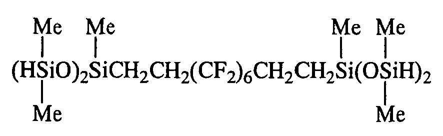

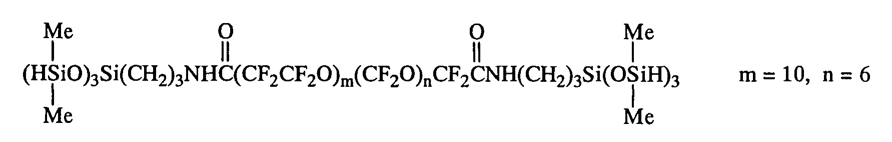

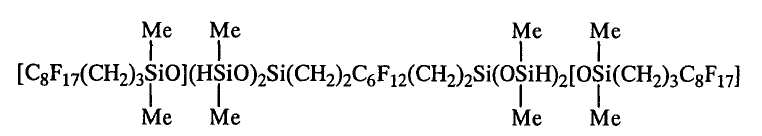

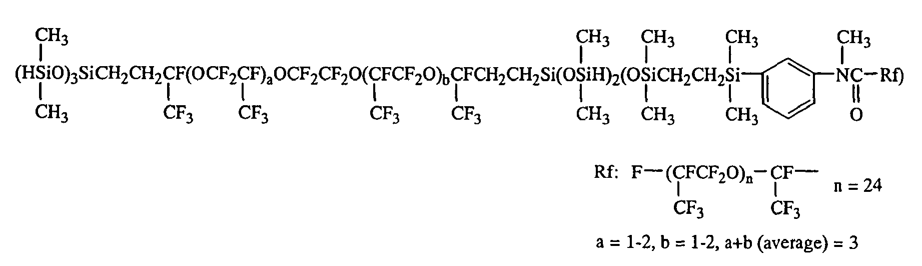

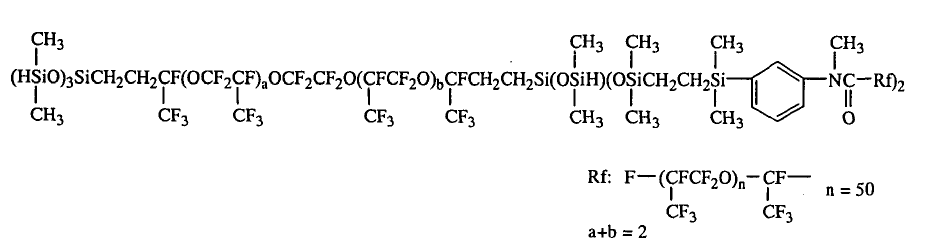

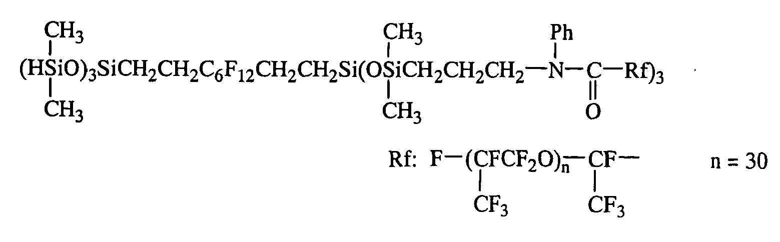

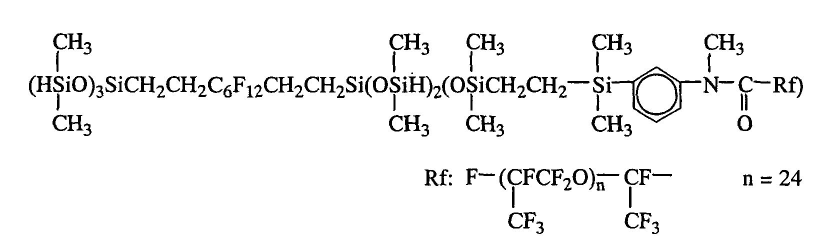

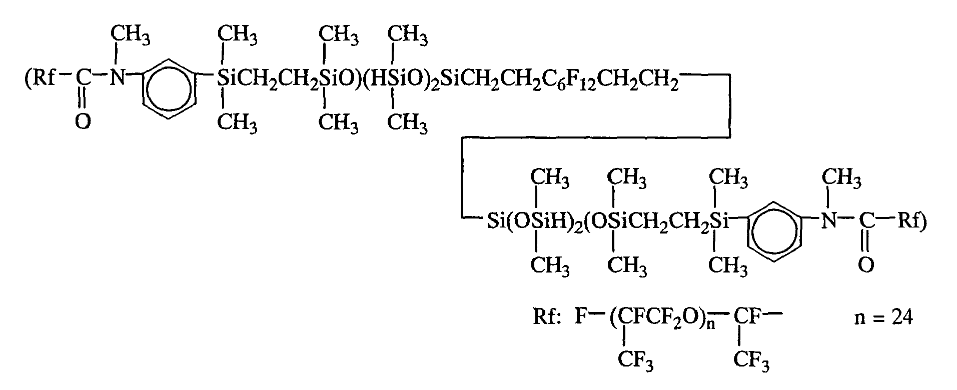

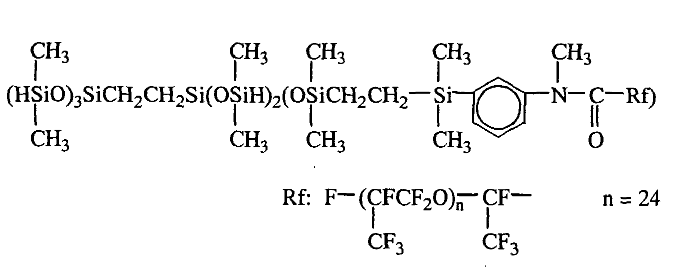

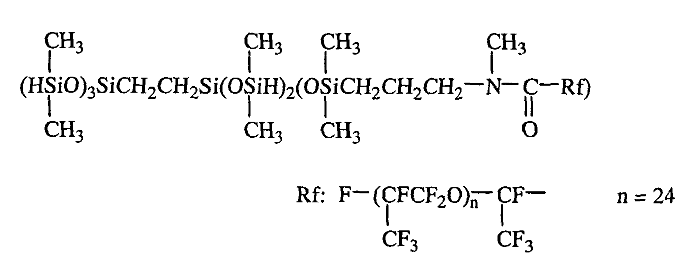

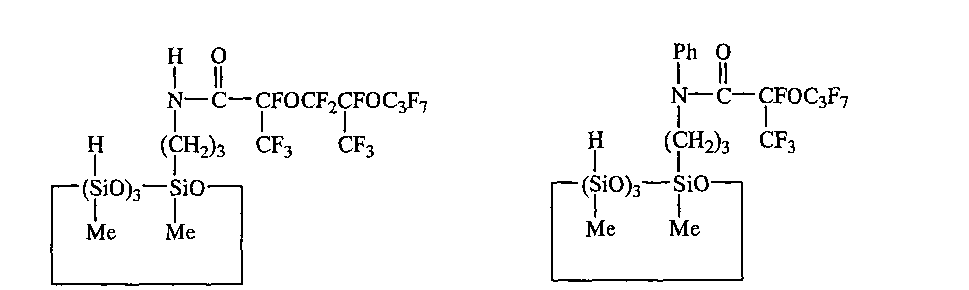

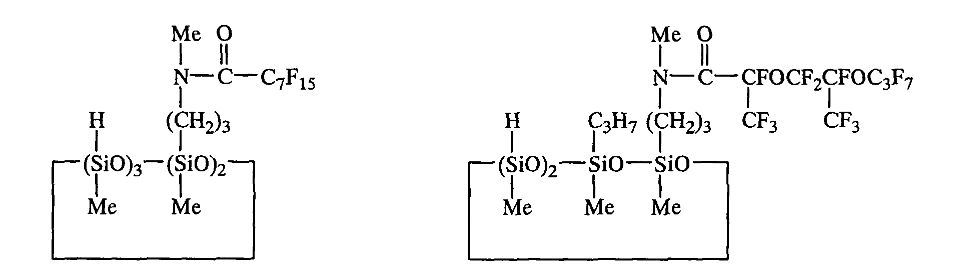

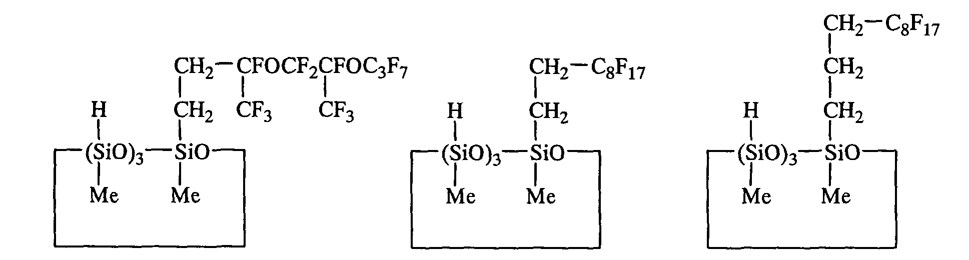

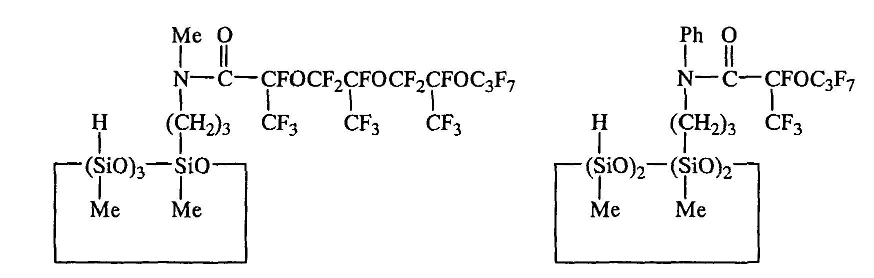

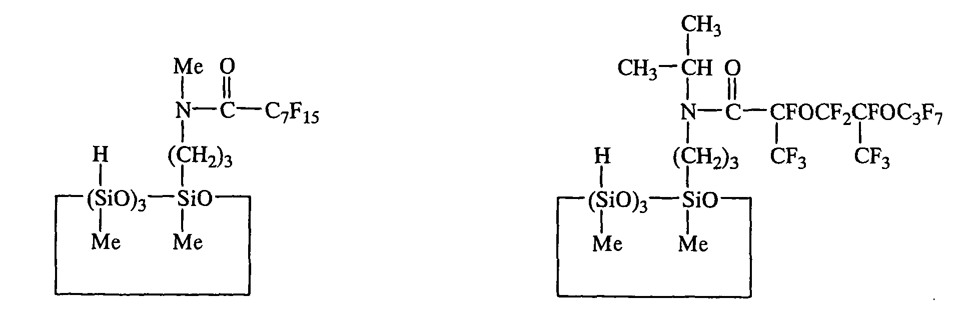

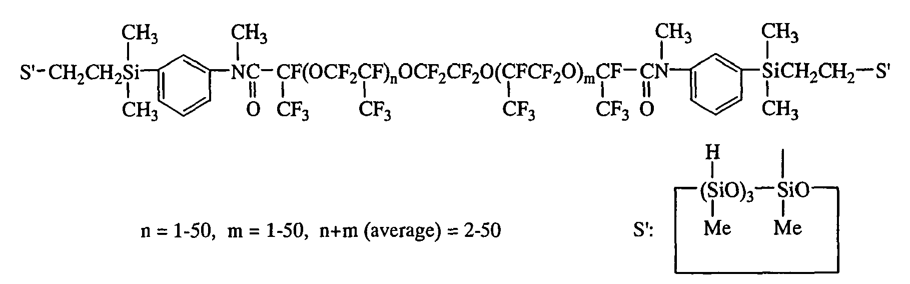

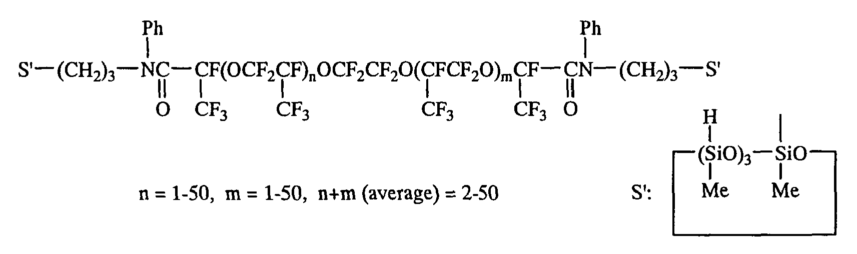

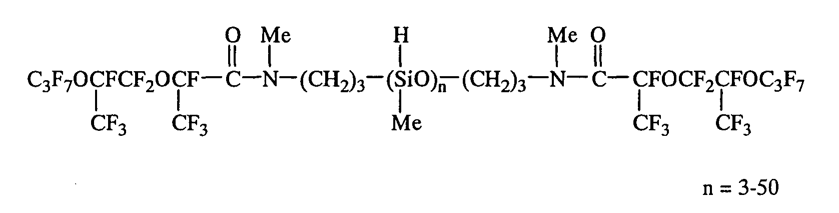

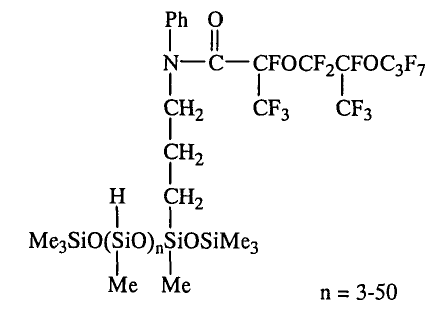

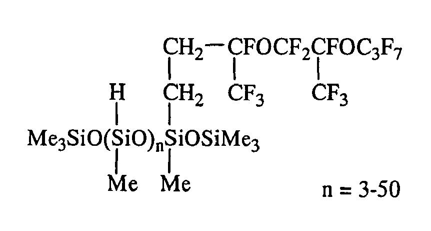

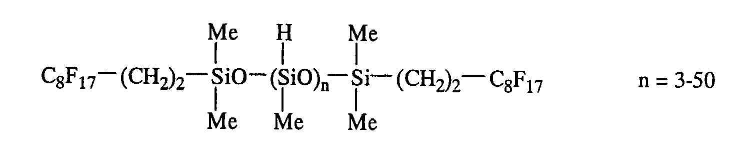

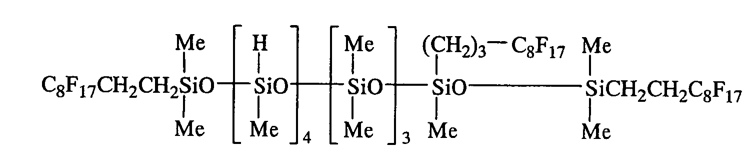

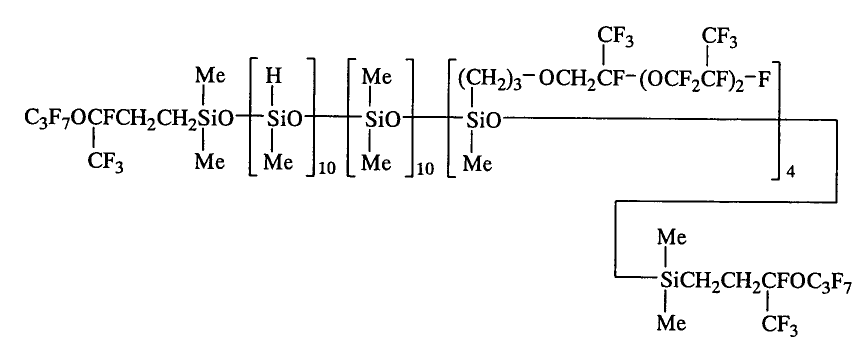

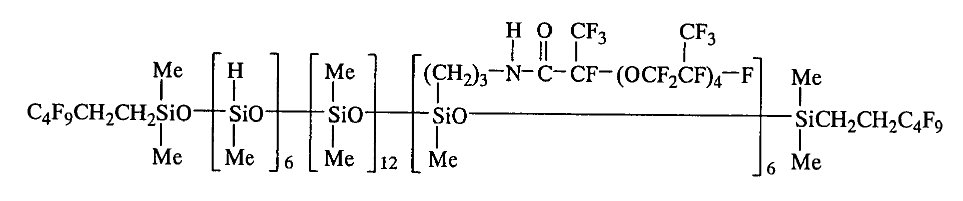

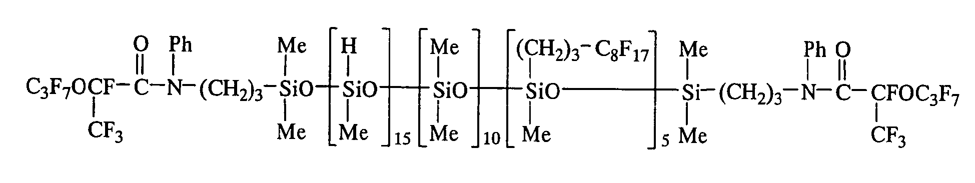

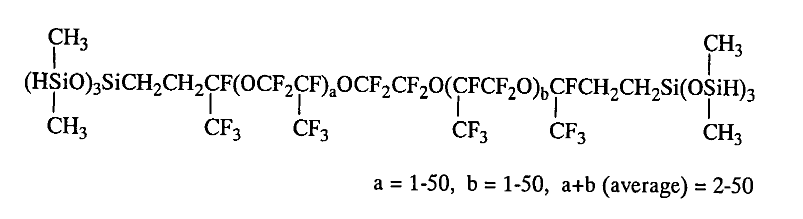

Component (C) is used in an effective amount for component (A) to cure, and preferably such that 0.5 to 2.0 moles, more preferably 0.7 to 1.5 moles of hydrosilyl (Si-H) groups in component (C) are available per mole of alkenyl groups in component (A). Less than 0.5 mole of hydrosilyl groups may lead to a lower degree of crosslinking, resulting in undercure. More than 2.0 moles of hydrosilyl groups can cause foaming during the cure and substantial changes of physical properties with time.

### Component D

Component (D) is a spherical silica powder having an average particle size of 0.1 to 5.0 µm. The powder may consist of truly spherical particles. The inclusion of component (D) facilitates to adjust the fluidity of the composition and improves defoaming. It also enables to reduce the coefficient of expansion and improve the heat dissipation of the cured composition. Preferred powder is of the same quality as quartz glass. Preferred powder contains less than 0.1% of coarse particles having a diameter of at least 10 µm, and has a mono-modal particle size distribution. If necessary, a mixture of powders having different average particle sizes within the above range may be used.

It is noted that a fluorinated curable composition having finely divided silica compounded therein is disclosed in the above-cited JP-A 2002-362307. In this composition where it is merely intended to reduce the fluidity of the gel composition by increasing the viscosity thereof, satisfactory results are achievable with 0.5 to 8 parts by weight of finely divided silica compounded per 100 parts by weight of component (A) or components (A) and (E) combined. Compounding more amounts of finely divided silica is unwanted because this compromise gel properties.

In the rubber composition described in JP-A 2000-7835 and the fluoropolyether rubber compositions described in JP-A 2000-248166, JP-A 2001-192546 and JP-A 2001-164115, the mechanical strength of the cured compositions is dramatically increased by compounding microparticulate silica therein. In these compositions, the amount of microparticulate silica compounded is limited to the range of 5 to 60 parts by weight relative to 100 to 150 parts by weight of component (A) or components (A) and (B) combined. Compounding more silica encounters physical difficulties.

According to the invention, spherical silica as component (D) can be heavily loaded. The amount of spherical silica compounded is 50 to 250 parts by weight, preferably 60 to 250 parts by weight per 100 parts by weight of components (A), (B) and (C) combined. Less than 50 parts by weight of spherical silica makes it difficult to adjust the fluidity of the composition, renders the composition less defoamable, and fails to reduce the coefficient of expansion and improve the heat dissipation of the cured composition. With more than 250 parts by weight of spherical silica, the composition has an extremely high viscosity and becomes difficult to handle or work.

### Component E

Component (E) in the inventive composition is a fluorinated trialkoxysilane serving as a surface treating agent for the spherical silica powder or component (D) for helping disperse component (D) in the composition. It is also effective for restraining spherical silica particles from settling down, and even when spherical silica particles have settled down, facilitates to disperse them again uniformly. The fluorinated trialkoxysilane has the general formula (5).

Rf²-(X')ₐ-CH₂CH₂Si(OR²)₃ (5)

In formula (5), X' and "a" are as defined in formula (1).

R² is a monovalent hydrocarbon group. The monovalent hydrocarbon groups represented by R² are preferably those of 1 to 8 carbon atoms, more preferably 1 to 4 carbon atoms, and desirably free of aliphatic unsaturation. Examples include alkyl groups such as methyl, ethyl, propyl, isopropyl, butyl, isobutyl, tert-butyl, pentyl, hexyl, and octyl, cycloalkyl groups such as cyclopentyl, cyclohexyl and cycloheptyl, aryl groups such as phenyl, tolyl and xylyl, and aralkyl groups such as benzyl and phenylethyl. Of these, methyl, ethyl, propyl, isopropyl, butyl, isobutyl and tert-butyl are preferred.

In formula (5), Rf² is a monovalent group having the general formula (iii):

F-[CF(CF₃)CF₂O]ᵤ-CF(CF₃)- (iii)

wherein u is an integer of at least 1 and smaller than the sum of p+q (average) and r in formula (i) or the sum of s+t (average) and r in formula (ii) for Rf¹ in formula (1), or the general formula (iv):

CᵥF₂ᵥ₊₁ - (iv)

wherein v is an integer of at least 1 and smaller than the number giving the same formula weight as Rf¹ in formula (1).

In the fluorinated trialkoxysilane having formula (5), u in formula (iii) is selected so as to meet the above condition relative to p, q and r in formula (i) representing Rf¹ in formula (1), or v in formula (iv) is selected so as to be smaller than the number giving the same formula weight as Rf¹ in formula (1), preventing component (E) from bleeding out of the cured composition.

Illustrative examples of the fluorinated trialkoxysilane having formula (5) are given below.

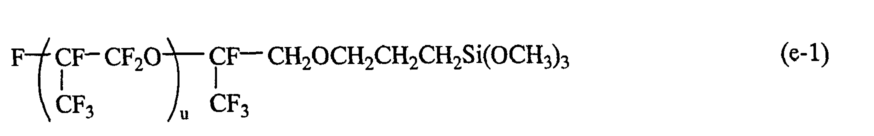

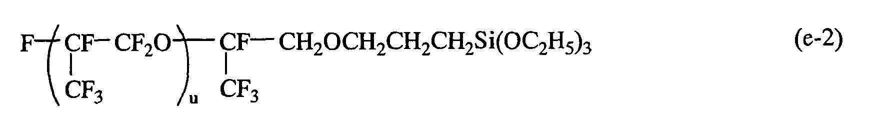

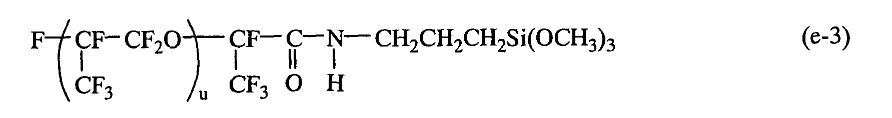

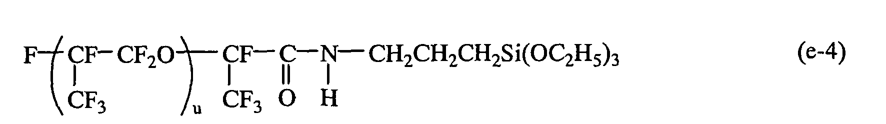

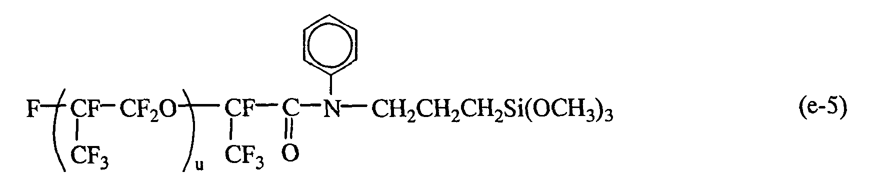

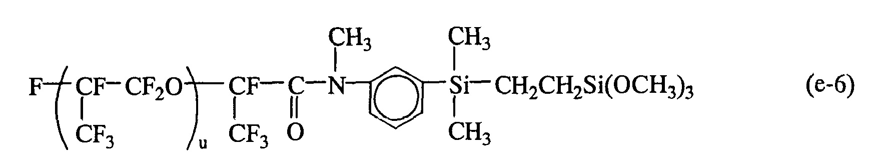

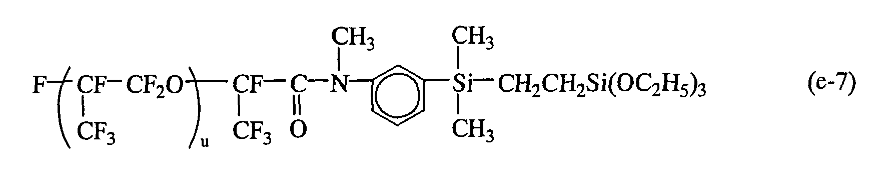

In formulae (e-1) through (e-7), u is as defined in formula (iii).

CᵥF₂ᵥ₊₁-CH₂CH₂Si(OCH₃)₃ (e-8)

CᵥF₂ᵥ₊₁-CH₂CH₂CH₂Si(OCH₃)₃ (e-9)

In formulae (e-8) and (e-9), v is as defined in formula (iv).

The amount of component (E) compounded is 0.2 to 4.0 parts by weight per 100 parts by weight of component (D). On this basis, less than 0.2 part of component (E) provides less surface treatment effects whereas more than 4.0 parts detracts from the physical properties of the cured composition and sometimes renders the surface of the cured composition tacky.

### Component F

Component (F) is a platinum group metal catalyst for promoting the addition reaction between alkenyl groups in component (A) and hydrosilyl groups in component (C). Of these catalysts, platinum compounds which are relatively easily available are often employed. The platinum compounds include, for example, chloroplatinic acid, complexes of chloroplatinic acid with olefins such as ethylene, alcohols and vinylsiloxanes, and metallic platinum on silica, alumina or carbon, though not limited thereto. Known examples of the platinum group compounds other than the platinum compound are rhodium, ruthenium, iridium and palladium compounds, for example, RhCl(PPh₃)₃, RhCl(CO)(PPh₃)₂, Ru₃(CO)₁₂, IrCl(CO)(PPh₃)₂, and Pd(PPh₃)₄ wherein Ph is phenyl.

The catalyst is used in a catalytic amount. Usually, the preferred amount of the catalyst is about 0.1 to 100 parts by weight of platinum group metal per million parts by weight of components (A) and (B) combined.

### Component G

To the curable fluoropolyether composition of the invention, various additives may be added, if desired, for enhancing the utility thereof. It is preferred to add as a tackifier (G) an organosiloxane having in a molecule (i) at least one silicon-bonded hydrogen atom (Si-H group), and (ii) at least one epoxy group bonded to a silicon atom through a carbon atom(s) or carbon and oxygen atoms, at least one trialkoxy group bonded to a silicon atom through a carbon atom(s) or carbon and oxygen atoms, or a mixture of at least one epoxy group and at least one trialkoxy group as defined above. Illustrative examples of the organosiloxane are given by the following structural formulae. One or more organosiloxanes may be used as component (G).

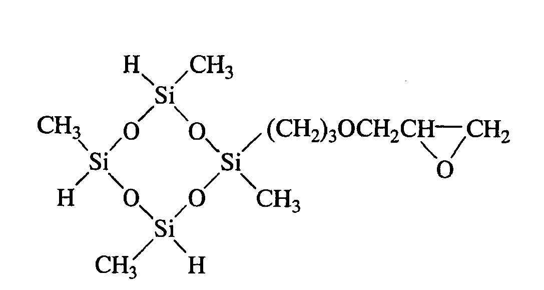

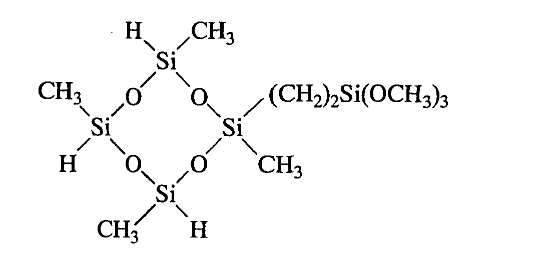

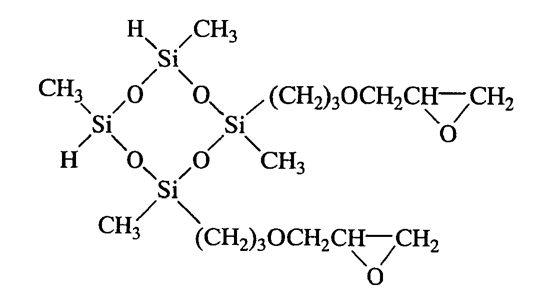

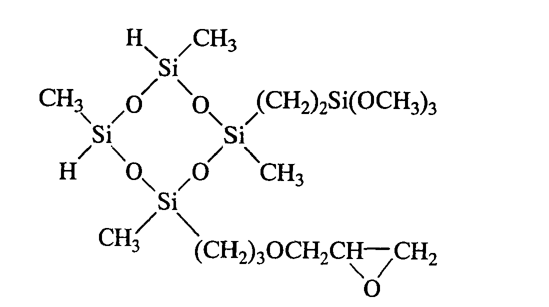

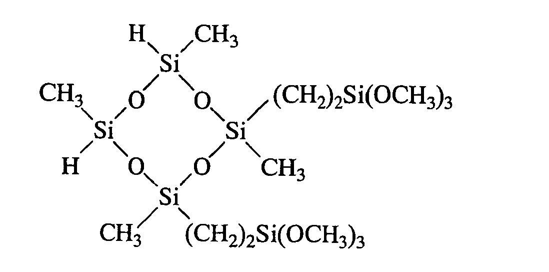

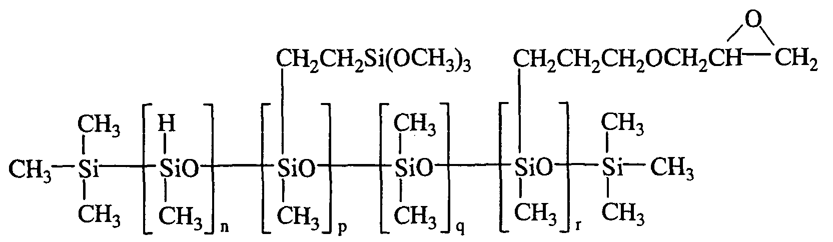

Each on n, q and r is a positive integer, and p is an integer of at least 0. 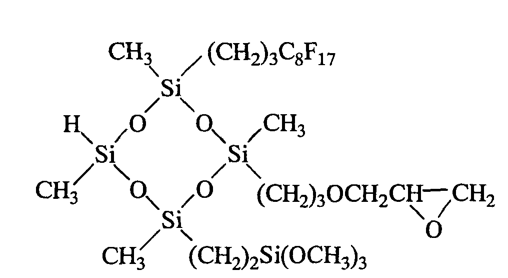 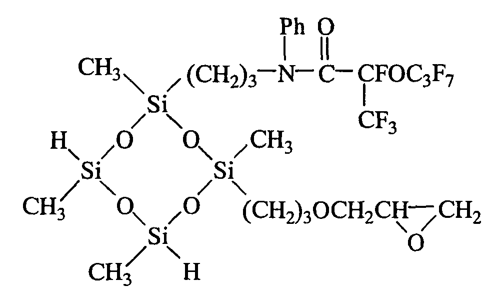 Ph stands for phenyl

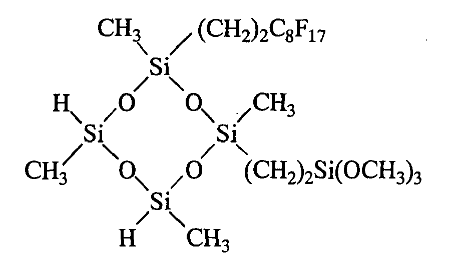

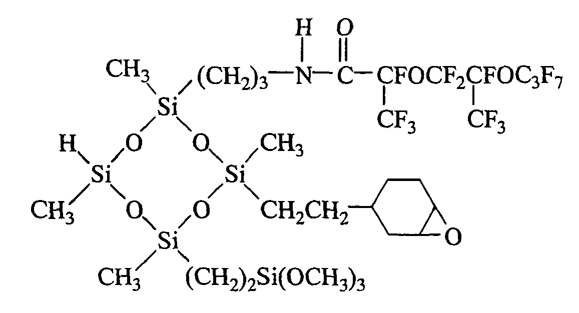

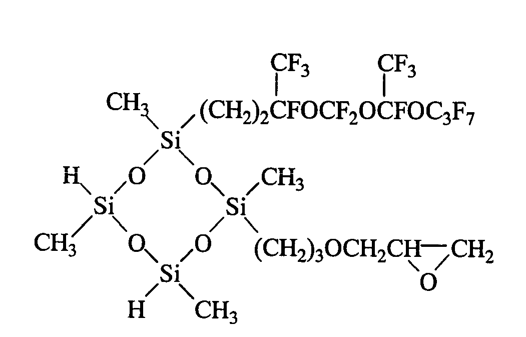

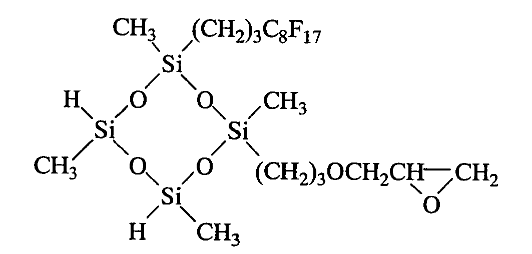

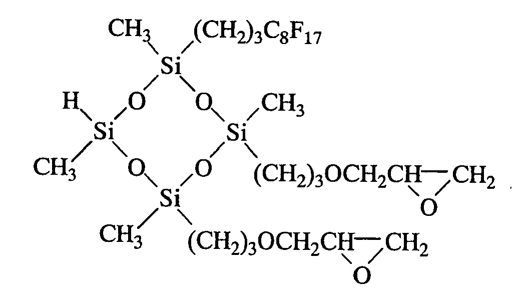

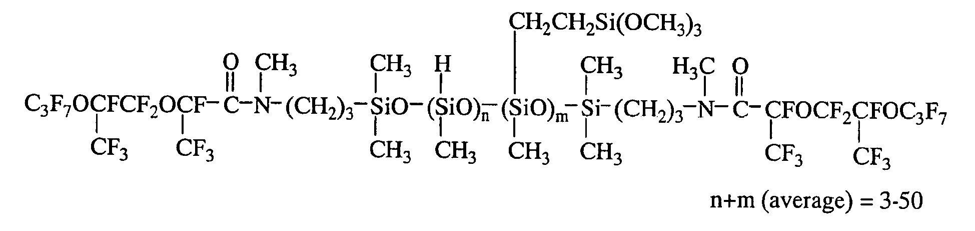

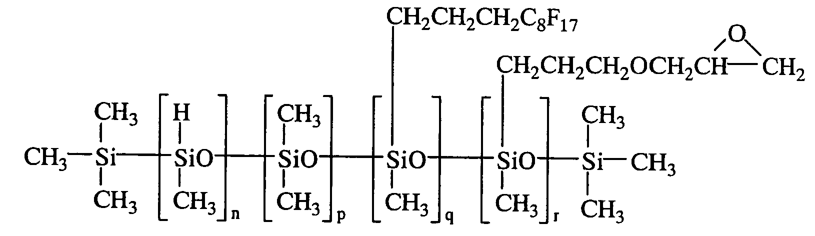

Each on n, q and r is a positive integer, and p is an integer of at least 0.

The amount of component (G) used is 0.1 to 5.0 parts by weight, preferably 0.2 to 4.0 parts by weight per 100 parts by weight of components (A), (B) and (C) combined. On this basis, less than 0.1 part may fail to provide sufficient adhesion whereas more than 5.0 parts may compromise the flow of the composition, cause foaming upon curing, or detract from the physical strength of the cured composition. When component (G) is added, an adhesion promoter such as carboxylic anhydride may be added concurrently.

Other additives which can be added herein include viscosity modifiers, reactive flexibilizers, plasticizers, regulators for hydrosilylation catalysts, inorganic fillers, organic fillers, adhesion promoters, adhesion aids other than component (G), and silane coupling agents. The amounts of these optional additives added are arbitrary insofar as they do not compromise the properties of the composition and the physical properties of the cured composition.

Preferred reactive flexibilizers and plasticizers which can be used herein are fluoropolyether monoalkenyl compounds having the general formula (6).

Rf³-(X')ₐ-CH=CH₂ (6)

Herein X' and "a" are as defined in formula (1). Rf³ is a monovalent group having the general formula (v):

F-[CF(CF₃)CF₂O]_{w}-C_{z}F_{2z}- (v)

wherein w is an integer of at least 1 and smaller than the sum of p+q (average) and r in formula (i) or the sum of s+t (average) and r in formula (ii) for Rf¹ in formula (1), and z is 2 or 3; preferably the general formula (iii):

F-[CF(CF₃)CF₂O]ᵤ-CF(CF₃) - (iii)

wherein u is an integer of at least 1 and smaller than the sum of p+q (average) and r in formula (i) or the sum of s+t (average) and r in formula (ii) for Rf¹ in formula (1).

In the fluoropolyether monoalkenyl compound having formula (6), w in formula (v) or u in formula (iii) is selected so as to meet the above condition relative to p, q and r in formula (i) representing Rf¹ in formula (1), preventing the unreacted components from bleeding out of the cured composition.

Illustrative examples of the fluoropolyether monoalkenyl compound having formula (6) are given below. 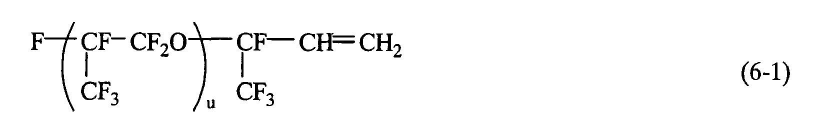 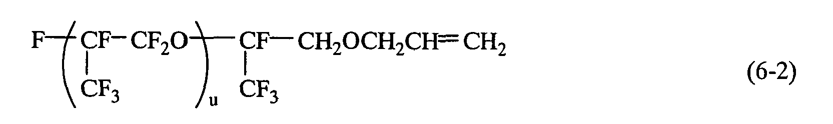 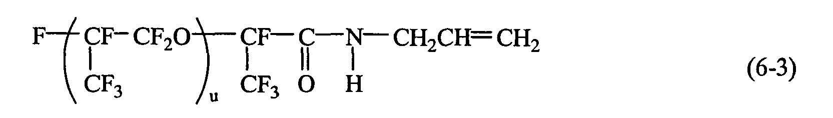 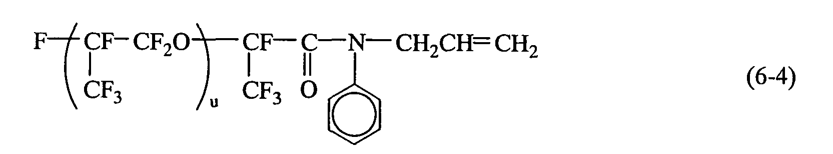 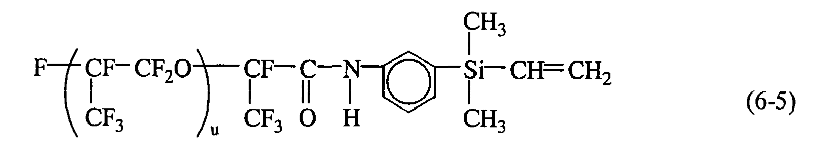 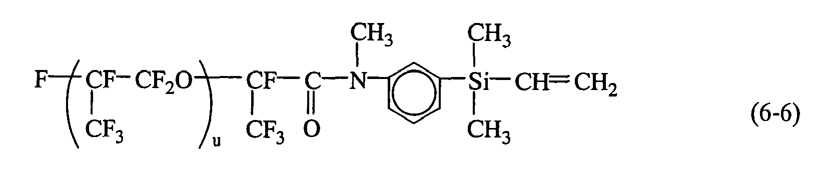 In formulae (6-1) through (6-6), u is as defined in formula (iii).

The amount of the fluoropolyether monoalkenyl compound having formula (6), if used, is 1 to 20 parts by weight, preferably 5 to 10 parts by weight per 100 parts by weight of the fluoropolyether compound (A) in the composition. The fluoropolyether monoalkenyl compound having formula (6) should preferably have a viscosity of 100 to 100,000 mPa·s at 23°C. In the embodiment wherein the fluoropolyether monoalkenyl compound having formula (6) is compounded, the amount of component (C) is determined while taking into account the amount of the fluoropolyether monoalkenyl compound having formula (6) as well as component (A). Specifically, the amount of component (C) is determined such that 0.5 to 2.0 moles, preferably 0.7 to 1.5 moles of Si-H groups are available per mole of alkenyl groups in the entire composition.

The regulators for hydrosilylation catalysts include, for example, acetylene alcohols such as 1-ethynyl-1-hydroxycyclohexane, 3-methyl-1-butyn-3-ol, 3,5-dimethyl-1-hexyn-3-ol, 3-methyl-1-penten-3-ol, and phenylbutynol, reaction products of a chlorosilane having at least one perfluoroalkylethyl or perfluoroalkylpropyl group with an acetylene alcohol, 3-methyl-3-penten-1-yne, 3,5-dimethyl-3-hexen-1-yne, triallyl isocyanurate, etc., polyvinylsiloxanes, and organic phosphorus compounds. These regulators are effective for maintaining curing reactivity and storage stability appropriate.

Examples of suitable inorganic fillers include reinforcing or semi-reinforcing fillers such as fumed silica, hydrophobic fumed silica, ground quartz, diatomaceous earth and calcium carbonate; inorganic pigments such as titanium oxide, iron oxide, carbon black, cobalt aluminate and ultramarine; heat resistance modifiers such as titanium oxide, iron oxide, carbon black, cerium oxide, cerium hydroxide, zinc carbonate, magnesium carbonate, and manganese carbonate; heat conductive agents such as alumina, boron nitride, silicon carbide and aluminum powder; and electrical conductive agents such as carbon black, silver powder, and conductive zinc white. Examples of suitable organic fillers include wear resistance modifiers such as ground tetrafluoroethylene resins and ground nylon resins, and organic pigments such as copper phthalocyanine.

Also useful herein are adhesion promoters such as carboxylic anhydrides and titanic acid esters, adhesion aids other than component (G), and silane coupling agents.

The curable fluoropolyether composition of the invention is prepared by any desired method, for example, by combining components (A) to (F), and optionally component (G) and other optional components, and uniformly mixing them on a mixer such as a planetary mixer, Ross Mixer or Hobart Mixer and optionally a kneading or milling unit such as a kneader or three-roll mill.

Depending on the identity of the catalyst (F), the inventive composition cures at room temperature. Often the composition is heated to promote curing. The composition is preferably cured by heating at a temperature of at least 60°C, more preferably 100 to 200°C for about 10 minutes to about 24 hours.

On use of the curable fluoropolyether composition of the invention, it may be dissolved in a suitable fluorinated solvent in a desired concentration prior to application depending on a particular use or purpose. Suitable fluorinated solvents include 1,3-bis(trifluoromethyl)benzene, Fluorinert® (3M), perfluorobutyl methyl ether, and perfluorobutyl ethyl ether.

Methods of preparing the compositions and of using them with curing e.g. for the purposes mentioned above, and cured rubbers obtainable from them, are further aspects of this invention.

### EXAMPLE

Examples of the invention are given below by way of illustration and not by way of limitation. Parts are by weight. Viscosity was measured at 23°C.

### Example 1

A planetary mixer was charged with 50 parts of a fluoropolyether compound having formula (7) (viscosity 10,000 mPa·s, number average molecular weight 17,000, vinyl content 0.012 mole/100 g), 50 parts of a perfluoropolyether having formula (8) (viscosity 260 mPa·s, number average molecular weight 4,500), and 1.0 part of a fluorinated trialkoxysilane having formula (9). 100 parts of spherical silica powder (average particle size 1.7 µm) was added to the mix, which was kneaded for 30 minutes without heating. Next, 0.10 part of a toluene solution of platinum-divinyltetramethyldisiloxane complex (platinum concentration 0.5 wt%), 0.15 part of a 50% toluene solution of ethynyl cyclohexanol, and 1.7 parts of an organohydrogenpolysiloxane having formula (10) were added in sequence. Mixing was continued for 15 minutes until uniform. With mixing continued, defoaming treatment under vacuum (60 Torr) was carried out for 15 minutes, completing a composition. 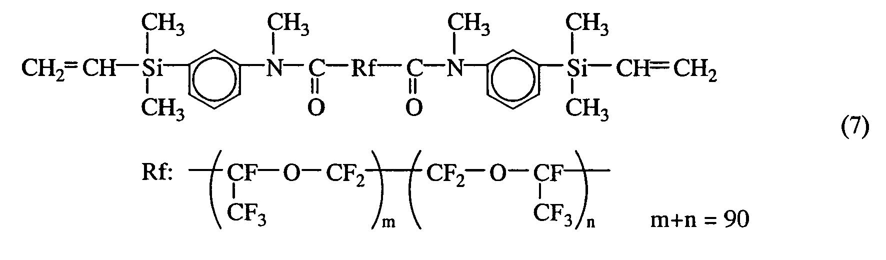
C₃F₇O-(CF₂CF₂CF₂O)ₘ-C₂F₅ m = 26 (8)

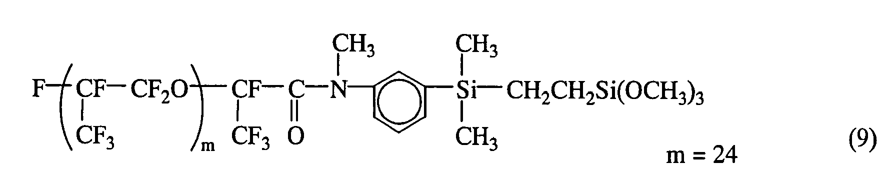

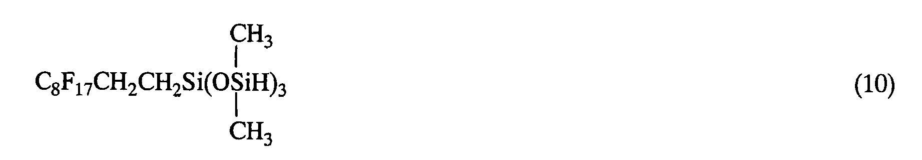

The composition thus obtained was cast into a rectangular mold of 2 mm thick, press cured at 100 kg/cm² and 150°C for 10 minutes, and oven cured at 150°C for 50 minutes, forming a cured sheet. Using a #2 dumbbell punching jig, a specimen was punched out of the sheet. The physical properties of the specimen were measured according to JIS K-6249 before and after the following test.

### Solvent resistance test

The specimen is immersed in a solvent at 23°C for 7 days, after which a volume change is determined. The solvents include hexane, toluene, unleaded gasoline, acetone and methanol.

### Oil resistance test

The specimen is immersed in an oil at 150°C for 240 hours, after which changes of physical properties are determined. An oil A: engine oil (Toyota Castle Neo-Gear) and oil B: gear oil (Toyota Castle Gear Oil Special II) are used as the test liquid for examining the durability upon immersion in hot machine oil.

### Chemical resistance test

The specimen is immersed in a chemical at 23°C for 7 days, after which changes of hardness and surface state are determined. The chemicals include acid, alkali and amine.

Before and after each test, the physical properties of the specimen were measured. The results are shown in Table 1 (solvent resistance), Tables 2 and 3 (oil resistance), and Table 4 (chemical resistance).

### Example 2

A composition was prepared as in Example 1 except that a perfluoropolyether having formula (11) (viscosity 760 mPa·s, number average molecular weight 4,100) was used instead of the perfluoropolyether having formula (8).

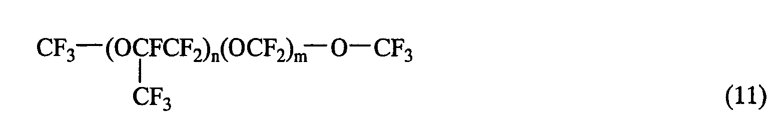

It is understood that n and m are numbers satisfying the above-described viscosity and molecular weight.

As in Example 1, a sheet for the solvent resistance test and a #2 dumbbell specimen were prepared. The tests of solvent resistance, oil resistance and chemical resistance were performed. The results are shown in Tables 1 to 4.

### Example 3

A composition was prepared as in Example 1 except that 3.0 parts of an organosiloxane having formula (12) was further added as a tackifier to the components used in Example 1.

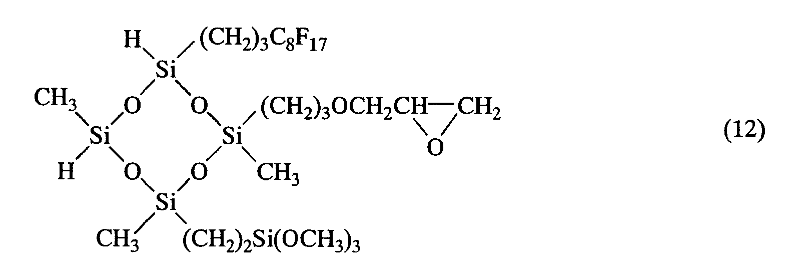

As in Example 1, a sheet for the solvent resistance test and a #2 dumbbell specimen were prepared. The tests of solvent resistance, oil resistance and chemical resistance were performed. The results are shown in Tables 1 to 4.

### Comparative Examples 1 and 2

Comparative Examples 1 and 2 used a silicone rubber KE1206 (Shin-Etsu Chemical Co., Ltd.) and a fluorosilicone rubber FE61 (Shin-Etsu Chemical Co., Ltd.), respectively, instead of the composition of Example 1. As in Example 1, a sheet for the solvent resistance test and a #2 dumbbell specimen were prepared. The tests of solvent resistance, oil resistance and chemical resistance were performed. The results are shown in Tables 1 to 4.

**Table 1 Solvent resistance: volume changes (%) after 23°C/7 day immersion**

| Solvent | Example | | | Comparative Example | |
|---|---|---|---|---|---|
| | 1 | 2 | 3 | 1 | 2 |
| Hexane | +5 | +5 | +5 | +170 | +25 |
| Toluene | +4 | +5 | +5 | +180 | +30 |
| Unleaded gasoline | +4 | +5 | +5 | +200 | +25 |
| Acetone | +2 | +2 | +3 | +15 | +180 |
| Methanol | +2 | +2 | +3 | +10 | +5 |

**Table 2 Engine oil resistance: physical changes after 150°C/240 hr immersion**

| | Property | Example | | | Comparative Example | |
|---|---|---|---|---|---|---|
| | | 1 | 2 | 3 | 1 | 2 |
| As cured (before test) | Hardness | 39 | 43 | 42 | 35 | 22 |
| | Elongation (%) | 220 | 210 | 230 | 220 | 170 |
| | Tensile strength (MPa) | 2.1 | 2.3 | 2.2 | 2.0 | 1.6 |
| After test | Hardness | 38 | 41 | 40 | 8 | 18 |
| | Elongation (%) | 150 | 140 | 160 | 110 | 140 |
| | Tensile strength (MPa) | 1.4 | 1.3 | 1.5 | 0.2 | 1.3 |

**Table 3 Gear oil resistance: physical changes after 150°C/240 hr immersion**

| | Property | Example | | | Comparative Example | |
|---|---|---|---|---|---|---|
| | | 1 | 2 | 3 | 1 | 2 |
| As cured (before test) | Hardness | 39 | 43 | 42 | 35 | 22 |
| | Elongation (%) | 220 | 210 | 230 | 220 | 170 |
| | Tensile strength (MPa) | 2.1 | 2.3 | 2.2 | 2.0 | 1.6 |
| After test | Hardness | 40 | 45 | 43 | 10 | 20 |
| | Elongation (%) | 170 | 160 | 180 | 130 | 150 |
| | Tensile strength (MPa) | 1.7 | 1.9 | 1.8 | 0.3 | 1.4 |

**Table 4 Chemical resistance: Hardness changes and surface state after 23°C/7 day immersion**

| Chemical | Example | | | | | | Comparative Example | | | |
|---|---|---|---|---|---|---|---|---|---|---|
| | 1 | | 2 | | 3 | | 1 | | 2 | |
| | Hardness change | Appearance | Hardness change | Appearance | Hardness change | Appearance | Hardness change | Appearance | Hardness change | Appearance |
| 36% HCl | +3 | unchanged | +4 | unchanged | +3 | unchanged | -5 | unchanged | -1 | unchanged |
| 98% H₂SO₄ | -9 | unchanged | -12 | unchanged | -10 | unchanged | UM | dissolved | UM | dissolved |
| 60% HNO₃ | +3 | unchanged | +3 | unchanged | +4 | unchanged | -20 | degraded surface | -4 | degraded surface |
| 40% NaOH aq. | +2 | unchanged | +3 | unchanged | +2 | unchanged | -2 | degraded surface | +2 | degraded surface |
| Butylamine | -4 | unchanged | -5 | unchanged | -4 | unchanged | UM | dissolved | UM | dissolved |

| | | | | | | | | | | |
|---|---|---|---|---|---|---|---|---|---|---|
| UM: unmeasurable | | | | | | | | | | |

## Claims

1. A curable fluoropolyether composition comprising, or preparable by combining,
(A) 20 to 80 parts by weight of a fluoropolyether compound having the general formula (1):
CH₂=CH-(X)ₐ-Rf¹-(X')ₐ-CH=CH₂ (1)
wherein X is a divalent group represented by -CH₂-, -CH₂O-, -CH₂OCH₂- or -Y-NR¹-CO- wherein Y is a divalent group of -CH₂- or 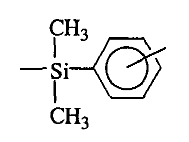 and R¹ is hydrogen or a substituted or unsubstituted monovalent hydrocarbon group; X' is a divalent group represented by -CH₂-, -OCH₂-, -CH₂OCH₂- or -CO-NR¹-Y'- wherein Y' is a divalent group of -CH₂- or 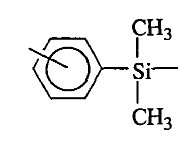 options for R¹ are as above; a is independently 0 or 1; and Rf¹ is a divalent group having the general formula (i):
-CF(CF₃)-[OCF₂CF(CF₃)]ₚ-O-CF₂(CF₂)ᵣCF₂-O-[CF(CF₃)CF₂O]_{q}-CF(CF₃)- (i)
wherein p and q each are an integer of at least 1, the sum of p+q on average is 2 to 200, and r is an integer of 0 to 6, or the general formula (ii):
-CF₂CF₂-[OCF₂CF(CF₃)]ₛ-O-CF₂(CF₂)ᵣCF₂-O-[CF(CF₃)CF₂O]ₜ-CF₂CF₂- (ii)
wherein s and t each are an integer of at least 1, the sum of s+t on average is 2 to 200, and r is as defined above,
(B) at least one perfluoropolyether selected from the class consisting of compounds having the general formula (2):
A-O-(CF₂CF₂CF₂O)_{b}-A (2)
wherein A are selected independently from CF₃-, C₂F₅- and C₃F₇-, b is an integer of 1 to 200 and smaller than the sum of p+q (average) and r in formula (i) or the sum of s+t (average) and r in formula (ii) for Rf¹ in formula (1), compounds having the general formula (3):
A-O-(CF₂O)_{c}(CF₂CF₂O)_{d}-A (3)
wherein A is as defined above, c and d each are an integer of 1 to 200, and the sum of c and d is smaller than the sum of p+q (average) and r in formula (i) or the sum of s+t (average) and r in formula (ii) for Rf¹ in formula (1), and compounds having the general formula (4):
A-O-(CF₂O)ₑ[CF₂CF(CF₃)O]_{f}-A (4)
wherein A is as defined above, e and f each are an integer of 1 to 200, and the sum of e and f is smaller than the sum of p+q (average) and r in formula (i) or the sum of s+t (average) and r in formula (ii) for Rf¹ in formula (1), component (B) being present in such an amount as to give 100 parts by weight of components (A) and (B) combined,
(C) organohydrogensiloxane having at least one perfluorooxyalkyl, perfluoroalkyl, perfluorooxyalkylene or perfluoroalkylene group and at least two silicon-bonded hydrogen atoms (Si-H groups) in a molecule, component (C) being present in such an amount as to provide 0.5 to 2.0 moles of Si-H groups per mole of alkenyl groups in component (A),
(D) spherical silica powder having an average particle size of 0.1 to 5.0 µm, in an amount of 50 to 250 parts by weight per 100 parts by weight of components (A), (B) and (C) combined,
(E) a fluorinated trialkoxysilane having the general formula (5):
Rf²- (X')ₐ-CH₂CH₂Si(OR²)₃ (5)
wherein options for X' and a are as for formula (1), R² is a monovalent hydrocarbon group, and Rf² is a monovalent group having the general formula (iii):
F-[CF(CF₃)CF₂O]ᵤ-CF(CF₃) - (iii)
wherein u is an integer of at least 1 and smaller than the sum of p+q (average) and r in formula (i) or the sum of s+t (average) and r in formula (ii) for Rf¹ in formula (1), or the general formula (iv):
CᵥF₂ᵥ₊₁- (iv)
wherein v is an integer of at least 1 and smaller than the number giving the same formula weight as Rf¹ in formula (1), component (E) being present in an amount of 0.2 to 4.0 parts by weight per 100 parts by weight of component (D), and
(F) an effective amount of a platinum group catalyst.

2. The curable fluoropolyether composition of claim 1, wherein the fluorinated trialkoxysilane of component (E) is at least one selected from the group consisting of compounds represented by the following formulae (e-1) to (e-9): 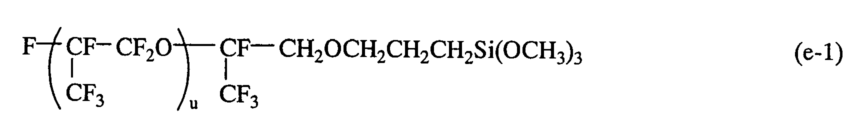 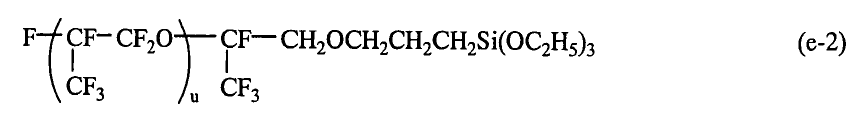 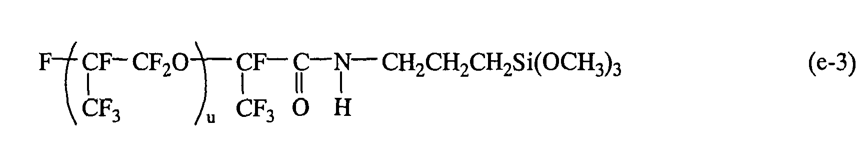 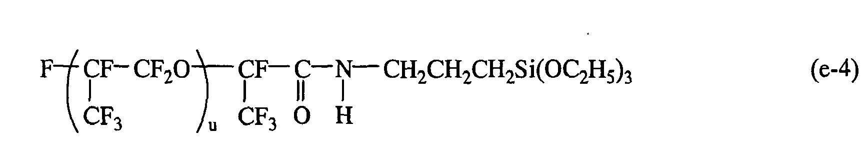 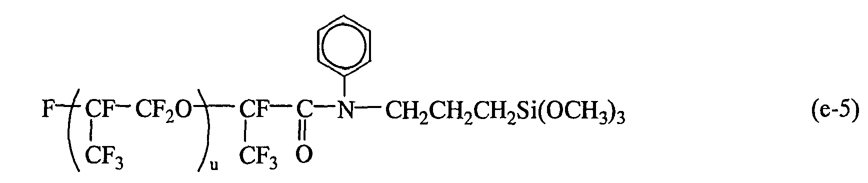 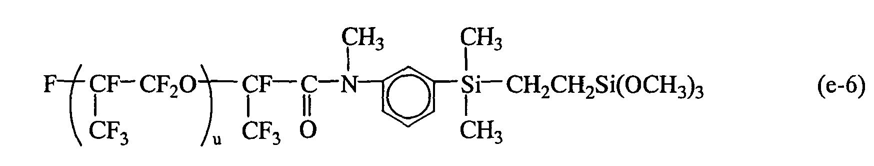 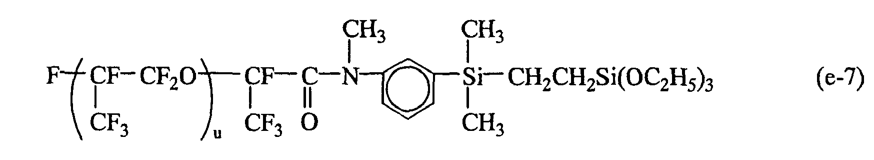
CᵥF₂ᵥ₊₁-CH₂CH₂Si(OCH₃) (e-8)
CᵥF₂ᵥ₊₁-CH₂CH₂CH₂Si(OCH₃)₃ (e-9)
wherein u is an integer of at least 1 and smaller than the sum of p+q (average) and r in formula (i) or the sum of s+t (average) and r in formula (ii) for Rf¹ in formula (1), and v is an integer of at least 1 and smaller than the number giving the same formula weight as Rf¹ in formula (1).

3. The curable fluoropolyether composition of claim 1 or 2 further comprising (G) an organosiloxane having in a molecule at least one silicon-bonded hydrogen atom (Si-H group), and at least one epoxy group bonded to a silicon atom through a carbon atom or carbon and oxygen atoms, at least one trialkoxy group bonded to a silicon atom through a carbon atom or carbon and oxygen atoms, or a mixture thereof, component (G) being present in an amount of 0.1 to 5.0 parts by weight per 100 parts by weight of components (A), (B) and (C) combined.

4. The curable fluoropolyether composition of claim 3, wherein the organosiloxane of component (G) is at least one selected from the group consisting of compounds represented by the following formulae: 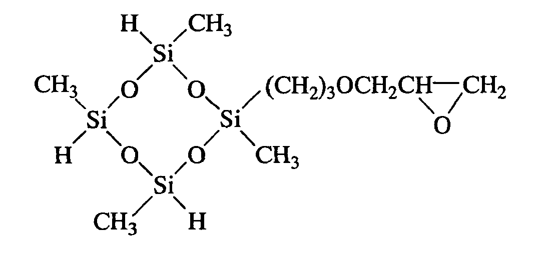 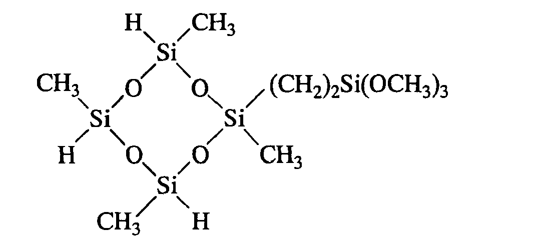 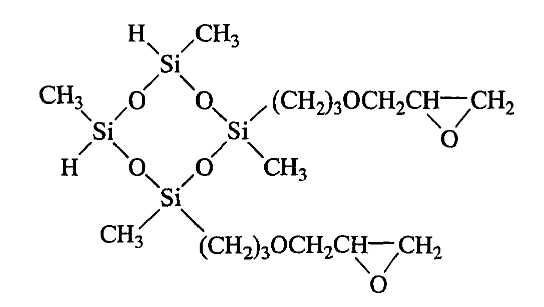 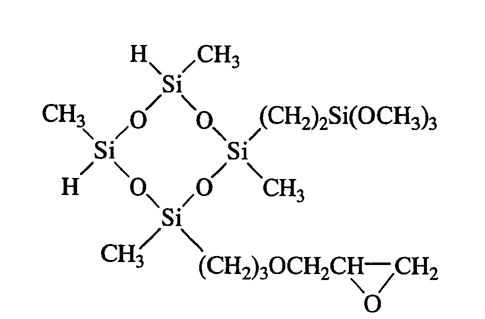 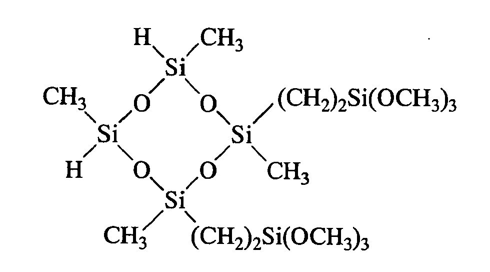 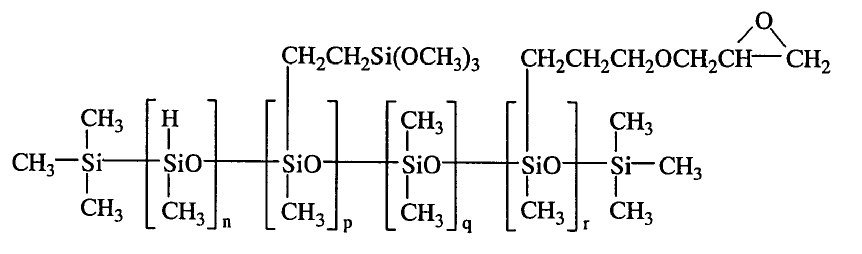
wherein each of n, q and r is a positive integer, and p is an integer of at least 0, 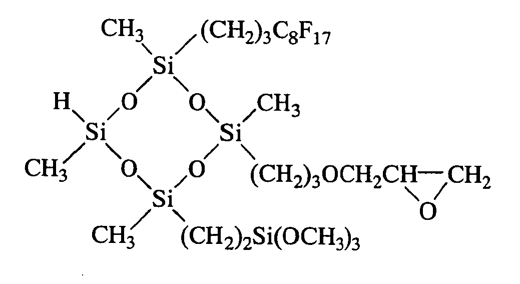 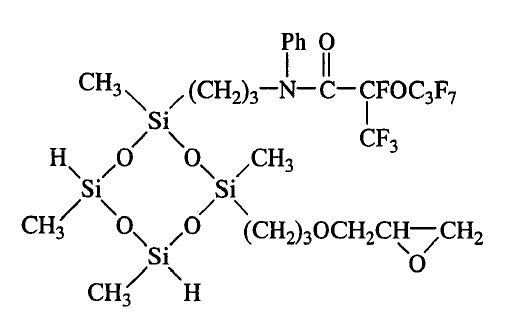
wherein Ph stands for phenyl, 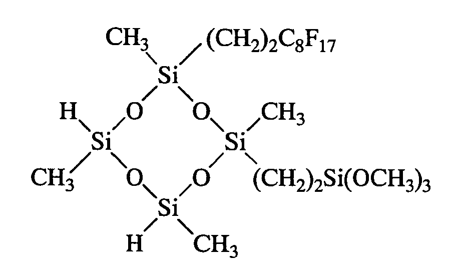 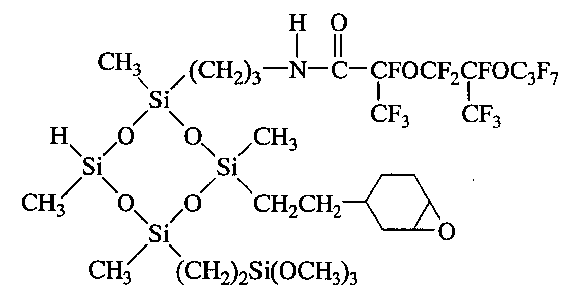 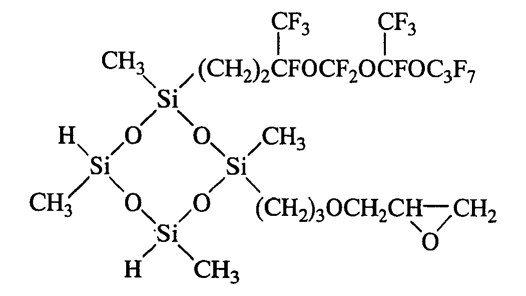 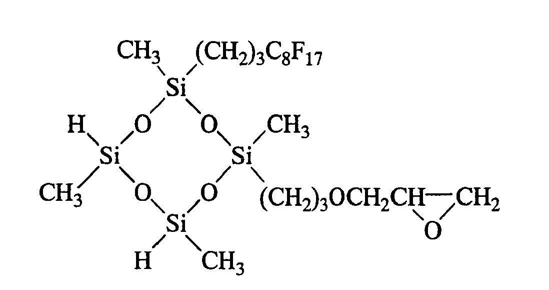 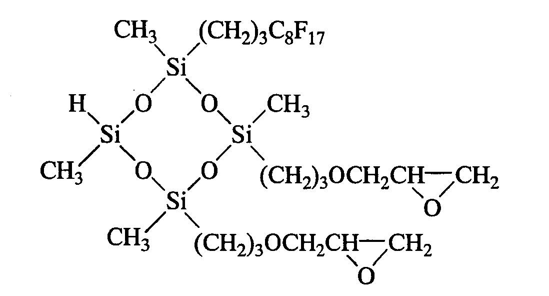 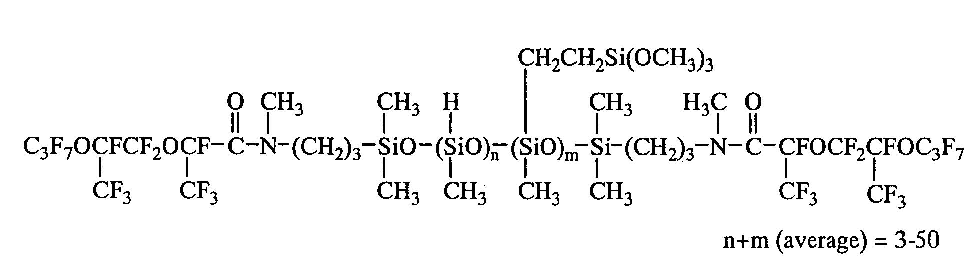 and 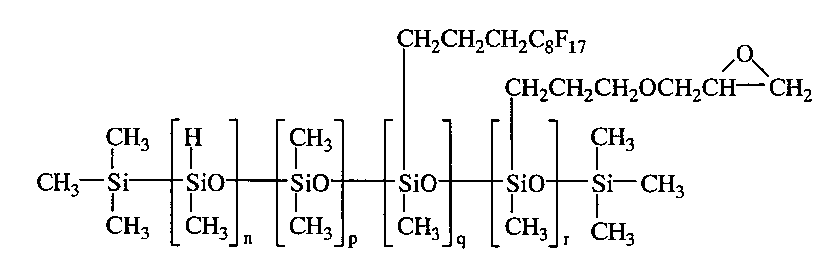
wherein each of n, q and r is a positive integer, and p is an integer of at least 0.

5. A method of preparing a curable fluoropolyether composition, comprising combining components as defined in any one of claims 1 to 4.

6. A method of making an article comprising curing a composition according to any one of claims 1 to 4.

7. A cured fluororubber obtainable by curing a composition according to any one of claims 1 to 4.
